(19) **Europäisches Patentamt European Patent Office Office européen des brevets**

(11) **EP 4 692 190 A1**

(12) **EUROPEAN PATENT APPLICATION**
published in accordance with Art. 153(4) EPC

(43) Date of publication:
**11.02.2026 Bulletin 2026/07**

(21) Application number: **24780118.6**

(22) Date of filing: **25.03.2024**

(51) International Patent Classification (IPC):
**C08J 9/18** $^{(2006.01)}$

(52) Cooperative Patent Classification (CPC):
**C08J 9/18**

(86) International application number:
**PCT/JP2024/011571**

(87) International publication number:
**WO 2024/204000 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 JP 2023050562**

(71) Applicant: **Kaneka Corporation**
**Osaka-shi, Osaka 530-8288 (JP)**

(72) Inventors:
• **MATSUDA, Akana**
**Settsu-shi, Osaka 566-0072 (JP)**
• **KIGUCHI, Taro**
**Settsu-shi, Osaka 566-0072 (JP)**

(74) Representative: **Vossius & Partner**
**Patentanwälte Rechtsanwälte mbB**
**Siebertstraße 3**
**81675 München (DE)**

(54) **POLYPROPYLENE-BASED FOAMED PARTICLES, POLYPROPYLENE-BASED FOAMED ARTICLE, AND METHODS FOR PRODUCING THESE**

(57) The problem of providing polypropylene-based expanded particles having an excellent filling property with respect to a mold which has a thin portion formation site is addressed. This problem is solved by a method for producing expanded particles, the method including: a first melting and kneading step of melting and kneading a polypropylene-based resin (a) and a polyethylene-based resin (b) to obtain a mixed resin; a second melting and kneading step of melting and kneading the obtained mixed resin to obtain resin particles having an L/D of not less than 2.0; and an expanding step of expanding the obtained resin particles.

FIG. 1

**Description**

Technical Field

The present invention relates to polypropylene-based expanded particles, a polypropylene-based foamed molded product, and methods for producing the polypropylene-based expanded particles and the polypropylene-based foamed molded product.

Background Art

A polypropylene-based foamed molded product obtained by molding polypropylene-based expanded particles formed from a polypropylene-based resin has various uses such as not only automotive interior materials and automotive bumper core materials but also heat insulating materials, shock-absorbing packing materials, and returnable containers.

As techniques regarding such polypropylene-based expanded particles and such a polypropylene-based foamed molded product, the techniques disclosed in Patent Literatures 1 and 2 are known, for example.

Recently, there has been a trend toward wider use of foamed molded products. In addition, demand for foamed molded products having more complex shapes (e.g., a thin portion) in accordance with desired uses is on the rise.

Citation List

[Patent Literature]

[Patent Literature 1]
International Publication No. WO2017/030124
[Patent Literature 2]
International Publication No. WO2013/099550

Summary of Invention

Technical Problem

However, the techniques above have room for improvement from the viewpoint of the property of filling, with polypropylene-based expanded particles, a molding mold (which can hereinafter be referred to simply as "mold") for molding (in particular, in-mold foam molding) polypropylene-based expanded particles, in particular, the property of filling a mold which has a thin portion formation site, which is the site for forming a thin portion of a resultant polypropylene-based foamed molded product.

In view of the situation above, an object of an embodiment of the present invention is to provide polypropylene-based expanded particles having an excellent filling property with respect to a mold which has a thin portion formation site.

Solution to Problem

The inventors of the present invention carried out diligent study in order to solve the above problem, and as a result, the inventors completed the present invention.

Specifically, an embodiment of the present invention is a method for producing polypropylene-based expanded particles, the method including: a first melting and kneading step of melting and kneading a polypropylene-based resin (a) and a polyethylene-based resin (b) to obtain a mixed resin; a second melting and kneading step of melting and kneading the mixed resin to obtain polypropylene-based resin particles; and an expanding step of expanding the polypropylene-based resin particles, the polypropylene-based resin particles having an L/D of not less than 2.0.

Another embodiment of the present invention includes polypropylene-based expanded particles having a sea-island structure in which a continuous phase and dispersed phases exhibit phase separation, the continuous phase including a polypropylene-based resin (a), the dispersed phases including a polyethylene-based resin (b), the dispersed phases having an aspect ratio of 7.5 to 20.0.

Advantageous Effects of Invention

An embodiment of the present invention provides an effect of making it possible to provide polypropylene-based expanded particles having an excellent filling property with respect to a mold which has a thin portion formation site.

Brief Description of Drawings

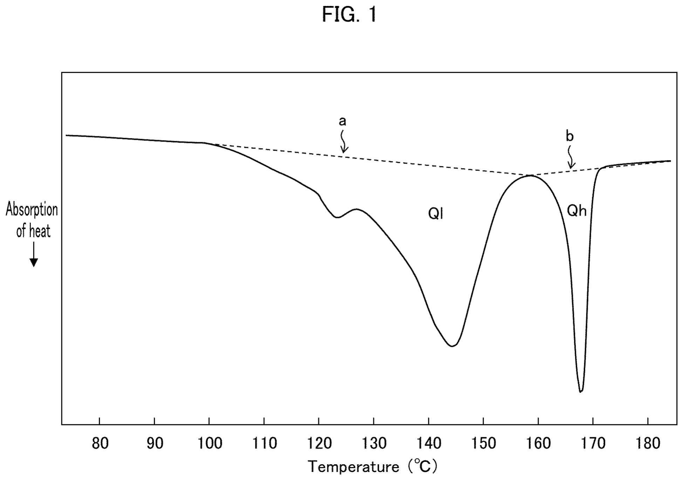

Fig. 1 is an example of the DSC curve obtained with use of a differential scanning calorimeter, by increasing the temperature of expanded particles in accordance with an embodiment of the present invention from 40°C to 220°C at a temperature increase rate of 10°C/minute, in which the horizontal axis represents a temperature and the vertical axis represents a quantity of heat.

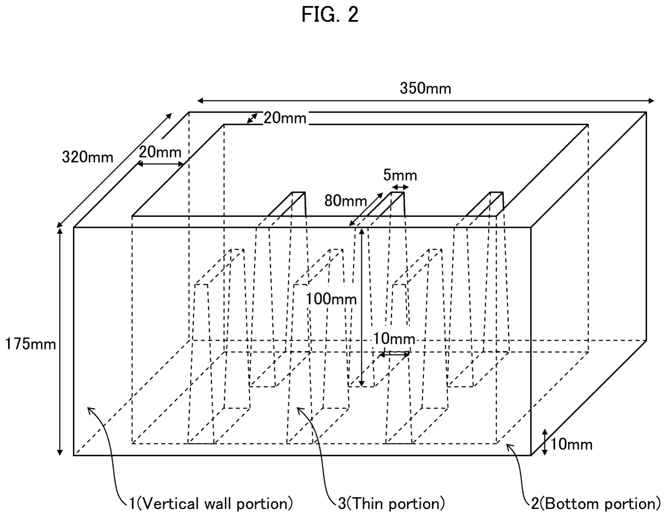

Fig. 2 is a schematic view of a foamed molded product in accordance with Examples of the present invention.

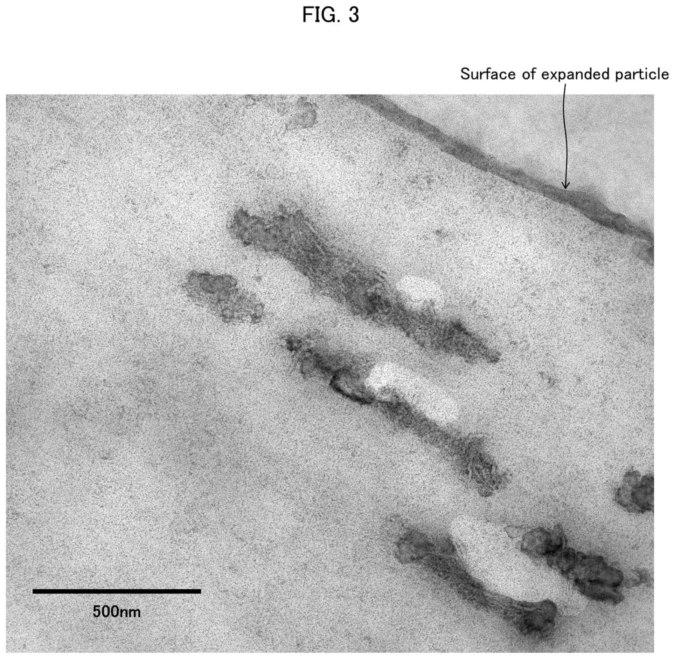

Fig. 3 is a representation of an example of the transmission electron microscope image of the expanded particles in accordance with an embodiment of the present invention, in which a weakly stained phase represents a continuous phase including a polypropylene-based resin (a) and a strongly stained phase represents a dispersed phase including a polyethylene-based resin (b).

Description of Embodiments

The following description will discuss embodiments of the present invention. The present invention is not, however, limited to the embodiments below. The present invention is not limited to arrangements described below, but may be altered in various ways by a skilled person within the scope of the claims. The present invention also encompasses, in its technical scope, any embodiment or example derived by combining technical means disclosed in respective differing embodiments and Examples. Further, it is possible to form a new technical feature by combining the technical means disclosed in the respective embodiments. All of the academic and patent literatures cited in the present specification are incorporated herein by reference. Any numerical range expressed as "A to B" in the present specification is intended to mean "not less than A and not more than B (i.e., a range from A to B which includes both A and B)" unless otherwise stated.
In the present specification, a "structural unit derived from an X monomer" contained in a polymer, a copolymer, or a resin can be referred to as an "X unit".

[Method for producing polypropylene-based expanded particles]

A polypropylene-based expanded particle production method in accordance with an embodiment of the present invention is the method including: a first melting and kneading step of melting and kneading a polypropylene-based resin (a) and a polyethylene-based resin (b) to obtain a mixed resin; a second melting and kneading step of melting, kneading, and granulating the mixed resin to obtain polypropylene-based resin particles; and an expanding step of expanding the polypropylene-based resin particles, the polypropylene-based resin particles having an L/D of not less than 2.0.
Since the polypropylene-based expanded particle production method in accordance with an embodiment of the present invention has the above configuration, it is possible to provide polypropylene-based expanded particles having an excellent filling property (which can hereinafter be referred to as a "thin portion filling property") with respect to a mold that has a thin portion formation site. The thin portion filling property of expanded particles can be evaluated by the method described in Examples.
It is possible to provide a polypropylene-based foamed molded product which has no irregularities in a thin portion thereof, by carrying out, via a known method, in-mold foam molding of polypropylene-based expanded particles obtained by the polypropylene-based expanded particle production method in accordance with an embodiment of the present invention, with use of a mold, which is preferably a mold having a thin portion formation site.
In the present specification, the "polypropylene-based resin particles" can be referred to as "resin particles", the "polypropylene-based resin particles in accordance with an embodiment of the present invention" can be referred to as "present resin particles", the "polypropylene-based expanded particles" can be referred to as "expanded particles", the "polypropylene-based expanded particles in accordance with an embodiment of the present invention" can be referred to as "present expanded particles", the "polypropylene-based expanded particle production method" can be referred to as "production method", the "polypropylene-based expanded particle production method in accordance with an embodiment of the present invention" can be referred to as "present production method", and the "polypropylene-based resin foamed molded product" can be referred to as "foamed molded product".

<First melting and kneading step>

The present production method includes a first melting and kneading step of melting and kneading a polypropylene-based resin (a) and a polyethylene-based resin (b) to obtain a mixed resin. In the first melting and kneading step, it is preferable to prepare the mixed resin consisting only of the polypropylene-based resin (a) and the polyethylene-based resin (b), in terms of making it possible to efficiently disperse the polyethylene-based resin. The first melting and kneading step may be the step of obtaining mixed resin particles including the polypropylene-based resin (a) and the polyethylene-based resin (b).

An aspect of the first melting and kneading step is not particularly limited, provided that it is possible to melt and knead the polypropylene-based resin (a) and the polyethylene-based resin (b) to obtain a mixed resin. Examples of specific aspects of the first melting and kneading step include the following methods (A1) or (A2):

(A1) a method of first mixing or blending the polypropylene-based resin (a) and the polyethylene-based resin (b) in a mixing device or the like to prepare a mixture, and then supplying the mixture to a melting and kneading device to melt and knead the mixture, thereby obtaining a mixed resin; and
(A2) a method of supplying the polypropylene-based resin (a) and the polyethylene-based resin (b) to a melting and kneading device to obtain a mixture in the melting and kneading device, and also melting and kneading the mixture to obtain a mixed resin.

The mixing device in the method described in (A1) is not particularly limited, but examples thereof include blenders (e.g., a ribbon blender, a flush blender) and mixers (e.g., a tumbler mixer, a super-mixer).

The melting and kneading device in the methods described in (A1) and (A2) is not particularly limited, but examples thereof include extruders, kneaders, a Banbury mixer, and rolls. Due to its excellent productivity and convenience, an extruder is preferable as the melting and kneading device, and a multi-axis extruder (e.g., a biaxial extruder) is more preferable.

In the first melting and kneading step, the temperature at which the polypropylene-based resin (a) and the polyethylene-based resin (b) are melted and kneaded is not particularly limited, provided that the polypropylene-based resin (a) and the polyethylene-based resin (b) are melted at the temperature, but for example, the melting and kneading is carried out such that the temperature (resin temperature) of a resin to be melted and kneaded becomes preferably 200°C to 240°C, more preferably 210°C to 230°C, and even more preferably 215°C to 225°C. The resin temperature in the first melting and kneading step being in the above range has the advantage of making it possible to efficiently melt and knead the polypropylene-based resin (a) and the polyethylene-based resin (b) without pyrolyzing said resins.

In the methods (A1) and (A2), the melted and kneaded mixture can be further cooled and solidified and cut into a desired shape. For example, the mixture having melted and kneaded with an extruder can extruded through a die provided in the extruder, then cooled and solidified in a water tank or the like, and then cut into pellets or granules.

<Mixed resin>

A mixed resin obtained in the first melting and kneading step is described here. The mixed resin is a resin obtained by melting and kneading the polypropylene-based resin (a) and the polyethylene-based resin (b). The mixed resin is preferably a resin consisting only of the polypropylene-based resin (a) and the polyethylene-based resin (b)

With respect to 100% by weight of the mixed resin, the mixed resin preferably contains 60% by weight to 99% by weight of the polypropylene-based resin (a) and 1% by weight to 40% by weight of the polyethylene-based resin (b), more preferably contains 65% by weight to 95% by weight of the polypropylene-based resin (a) and 5% by weight to 35% by weight of the polyethylene-based resin (b), and even more preferably contains 70% by weight to 90% by weight of the polypropylene-based resin (a) and 10% by weight to 30% by weight of the polyethylene-based resin (b). This configuration has the advantage of making it possible to provide a polypropylene-based foamed molded product which has sufficient strength and excellent surface appearance, and has no irregularities in a thin portion thereof.

In other words, the first melting and kneading step is preferably the step of preparing a mixed resin including the above amounts of the polypropylene-based resin (a) and the polyethylene-based resin (b). The content of each of the resin components in the mixed resin is proportional to the amount of that resin component melted and kneaded in the first melting and kneading step. Thus, in the first melting and kneading step, the polypropylene-based resin (a) and the polyethylene-based resin (b) are melted and kneaded preferably in amounts of 60 parts by weight to 99 parts by weight and 1 part by weight to 40 parts by weight, respectively, more preferably in amounts of 65 parts by weight to 95 parts by weight and 5 parts by weight to 35 parts by weight, respectively, and even more preferably in amounts of 70 parts by weight to 90 parts by weight and 10 parts by weight to 30 parts by weight, respectively, such that the total amount of the resins (a) and (b) is 100 parts by weight.

(Polypropylene-based resin (a))

Here is a description of the polypropylene-based resin (a), which is a raw material of the mixed resin. The polypropylene-based resin (a) is a polypropylene-based resin.

In the present specification, the "polypropylene-based resin" is intended to mean a resin that includes not less than 50 mol% of the propylene unit with respect to 100 mol% of all the structural units which constitute the resin.

The polypropylene-based resin (a) may be (i) a homopolymer of propylene, may be (ii) a block copolymer, an impact copolymer, an alternating copolymer, a random copolymer, or a graft copolymer of propylene and a monomer other than propylene, or may be (iii) a mixture of at least two thereof.

Among these, the polypropylene-based resin (a) is preferably a random copolymer of propylene and a monomer other than propylene because the random copolymer has an advantage that resin particles and expanded particles can be processed at a low heating temperature in the expanding step (described later) and an in-mold foam molding step.

In addition to the propylene unit, the polypropylene-based resin (a) may have one or more units of a structural unit derived from a monomer other than the propylene monomer, or may have one or more types of structural units derived from monomers other than the propylene monomer. The "monomer(s) other than the propylene monomer", from which the polypropylene-based resin is derived (i.e., which serves as a raw material), can be referred to as a "comonomer(s)". The "structural unit(s) derived from a monomer(s) other than the propylene monomer" contained in the polypropylene-based resin can be referred to as a "comonomer unit(s)".

Examples of the comonomer from which the comonomer unit that can constitute the polypropylene-based resin (a) is derived include $\alpha$-olefins having 2 carbon atoms or 4 to 12 carbon atoms, such as ethylene, 1-butene, isobutene, 1-penten, 3-methyl-1-butene, 1-hexene, 4-methyl-1-penten, 3,4-dimethyl-1-butene, 1-heptene, 3-methyl-1-hexene, 1-octene, and 1-decene.

Specific examples of the polypropylene-based resin (a) include polypropylene homopolymers, ethylene/propylene random copolymers, 1-butene/propylene random copolymers, 1-butene/ethylene/propylene random copolymers, ethylene /propylene block copolymers, 1-butene/propylene block copolymers, propylene/chlorinated vinyl copolymers, propylene/maleic anhydride copolymers, and styrene-modified polypropylene-based resins.

As the polypropylene-based resin (a), the above specific examples can be used singly, or two or more thereof may be used in combination. Among the above specific examples, ethylene/propylene random copolymers and 1-butene/ethylene/propylene random copolymers are suitable in that: resultant resin particles have good expandability; and resultant expanded particles have good moldability.

The case (hereinafter "Case A") in which an ethylene/propylene random copolymer is used as the polypropylene-based resin is considered here. In Case A, the ethylene content in the ethylene/propylene random copolymer is preferably 0.2% by weight to 15.0% by weight, more preferably 0.5% by weight to 10.0% by weight, and even more preferably 0.5% by weight to 4.0% by weight, with respect to 100% by weight of each copolymer. The ethylene content can also be said to be the content of a structural unit (ethylene unit) derived from ethylene. In a case (i) where the content of the ethylene unit contained in the ethylene/propylene random copolymer is not less than 0.2% by weight, the resin particles tend to have good expandability and/or resultant expanded particles tend to have good moldability. In a case (ii) where the content of the ethylene unit contained in the ethylene/propylene random copolymer is not more than 15.0% by weight, there is no possibility that the mechanical properties of a foamed molded product obtained by molding the present expanded particles deteriorate.

The melting point of the polypropylene-based resin (a) is not particularly limited, but is preferably 135°C to 160°C, more preferably 136°C to 155°C, more preferably 137°C to 153°C, and more preferably 138°C to 152°C. In a case (i) where the melting point of the polypropylene-based resin (a) is not less than 135°C, a foamed molded product having excellent dimensional stability at a high temperature tends to be obtained. In a case (ii) where the melting point of the polypropylene-based resin (a) is not more than 155°C, it is possible to obtain a foamed molded product by in-mold foam molding at a low steam pressure. The melting point of the polypropylene-based resin can be measured by the method described in Examples.

The melt flow rate (MFR) of the polypropylene-based resin (a) at 230°C is not particularly limited, but is preferably 1.00 g/10 minutes to 20.00 g/10 minutes, more preferably 2.00 g/10 minutes to 15.00 g/10 minutes, and even more preferably 2.50 g/10 minutes to 11.0 g/10 minutes. When the MFR of the polypropylene-based resin (a) is in the above range, it is possible to provide expanded particles having a high closed cell ratio, and as a result, a resultant foamed molded product has a tendency (i) to have a good compressive strength and a tendency (ii) to have good surface properties. The MFR of the polypropylene-based resin (a) at 230°C is determined in a measurement carried out with use of a melt mass flow rate (hereafter, MFR) meter described in JIS K 7210, under the following conditions: the diameter of an orifice is 2.0959 $\pm$ 0.005 mm; the length of the orifice is 8.000 $\pm$ 0.025 mm; the load is 2,160 g; and the temperature is 230 $\pm$ 0.2°C. The MFR can also be referred to as "melt index (MI)".

(Polyethylene-based resin (b))

Here is a description of the polyethylene-based resin (b), which is a raw material of the mixed resin. The polyethylene-based resin (b) is a polyethylene-based resin.

In the present specification, the "polyethylene-based resin" is intended to mean a resin that includes not less than 50 mol% of the ethylene unit with respect to 100 mol% of all the structural units which constitute the resin.

In the present specification, a resin including 50 mol% of the propylene unit and 50 mol% of the ethylene unit with respect to 100 mol% of all the structural units which constitute the resin is regarded as the "polypropylene-based resin".

The polyethylene-based resin (b) may be (i) a homopolymer of ethylene, may be (ii) a block copolymer, an alternating copolymer, a random copolymer, or a graft copolymer that is a copolymer of ethylene and a monomer other than ethylene, or may be (iii) a mixture of at least two thereof.

In addition to the ethylene unit, the polyethylene-based resin (b) may have one or more units of a structural unit derived from a monomer other than the ethylene monomer, or may have one or more types of structural units derived from monomers other than the ethylene monomer.

Examples of the comonomer from which the comonomer unit that can constitute the polyethylene-based resin (b) is derived include: $\alpha$-olefins having 3 to 12 carbon atoms, such as propylene, 1-butene, isobutene, 1-penten, 3-methyl-1-butene, 1-hexene, 4-methyl-1-penten, 3,4-dimethyl-1-butene, 1-heptene, 3-methyl-1-hexene, 1-octene, and 1-decene; and vinyl-based monomers such as vinyl acetate and (meth)acrylic acid.

Specific examples of the polyethylene-based resin (b) include high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer.

As the polyethylene-based resin (b), the above specific examples may be used singly, or two or more of the above specific examples may be used in combination. Among the above specific examples, high-density polyethylene is preferable because of high crystallinity and ease of availability.

The melting point of the polyethylene-based resin (b) is not particularly limited, but is preferably 100°C to 140°C, more preferably 105°C to 130°C, and even more preferably 110°C to 128°C. In a case (i) where the melting point of the polyethylene-based resin (b) is not less than 100°C, a resultant foamed molded product tends to have excellent mechanical properties such as compressive strength, and in a case (ii) where the melting point is not more than 130°C, the expanded particles have an advantage of excellent expandability. The melting point of the polyethylene-based resin can be measured by the method described in Examples.

The density of the polyethylene-based resin (b) is not particularly limited, but is preferably 0.900 g/cm$^3$ to 0.970 g/cm$^3$, and more preferably 0.910 g/cm$^3$ to 0.965 g/cm$^3$. When the density of the polyethylene-based resin (b) is 0.900 g/cm$^3$ to 0.970 g/cm$^3$, the contraction of a resultant foamed molded product tends to be inhibited. The density of the polyethylene-based resin can be measured by the method described in JIS K 7112:1999.

The melt flow rate (MFR) of the polyethylene-based resin (b) at 190°C is not particularly limited, but is preferably 0.01 g/10 minutes to 20.00 g/10 minutes, more preferably 0.00 g/10 minutes to 5.00 g/10 minutes, and even more preferably 0.01 g/10 minutes to 2.50 g/10 minutes. When the MFR of the polyethylene-based resin (b) is in the above range, it is possible to provide expanded particles having a high closed cell ratio, and as a result, a resultant foamed molded product has a tendency (i) to have a good compressive strength and a tendency (ii) to have good surface properties. The MFR of the polyethylene-based resin (b) at 190°C is determined in a measurement carried out with use of a melt mass flow rate (hereafter, MFR) meter described in JIS K 7210, under the following conditions: the diameter of an orifice is 2.0959 ± 0.005 mm; the length of the orifice is 8.000 ± 0.025 mm; the load is 2160 g; and the temperature is 190 ± 0.2°C The MFR can also be referred to as "melt index (MI)".

Recently, there has been a need to use recycled resins when producing resin products in order to reduce the environmental load. As such, the polypropylene-based resin (a), the polyethylene-based resin (b), and another resin to be added in the second melting and kneading step (described later) preferably includes recycled resins, and more preferably is a recycled resin. A recycled resin is intended to mean the polypropylene-based resin or the polyethylene-based resin which was in the form of a polypropylene-based resin product or a polyethylene-based resin product (e.g., expanded particles, a foamed molded product, a film, packaging containers such as a food tray, a bag, and a bottle, sundry goods such as a case for clothes and a plastic file folder, etc.) at least one time, and thereafter, was again made into, via any means (e.g., melting), the form of a polypropylene-based resin (or polypropylene-based resin particles) or a polyethylene-based resin (or polyethylene-based resin particles).

A method for producing the recycled resin, in other words, a method for recycling a polypropylene-based resin product and a polyethylene-based resin product, is not particularly limited, but a known method can be employed. Examples of the method include a method of crushing and melting a polypropylene-based resin product and a polyethylene-based resin product and a method of chopping these resin products. In an embodiment of the present invention, such a crushed material or a chopped material of a polypropylene-based resin product and/or a polyethylene-based resin product can also be used as the polypropylene-based resin (a) and/or the polyethylene-based resin (b). That is, the first melting and kneading step may be the step of melting and kneading a crushed material or a chopped material of the above polypropylene-based resin product and/or polyethylene-based resin product.

In a case of using a recycled polypropylene-based resin and a recycled polyethylene-based resin as the polypropylene-based resin (a) and/or the polyethylene-based resin (b) or as the another resin to be added in the second melting and kneading step (described later), the preferable aspects (e.g., composition, melting point, MFR, etc.) of the recycled polypropylene-based resin and the recycled polyethylene-based resin are as described above.

<Second melting and kneading step>

The present production method includes a second melting and kneading step of melting and kneading the mixed resin prepared in the first melting and kneading step to obtain resin particles. In other words, the present production method further includes, in addition to the first melting and kneading step, the second melting and kneading step of melting and kneading the mixed resin to obtain resin particles.

The resin particles obtained in the second melting and kneading step have an L/D of not less than 2.0. By expanding, in the expanding step (described later), the resin particles having an L/D of not less than 2.0, it is possible to provide a foamed molded product having excellent surface appearance and it is also possible to provide expanded particles excellent in the thin portion filling property. Therefore, the second melting and kneading step can be said to be the step of obtaining resin particles (i.e., the present resin particles) which include the mixed resin and which have an L/D of not less than 2.0.

The L/D of the present resin particles is more preferably not less than 2.2, and even more preferably not less than 2.4. The L/D of the present resin particles is preferably not more than 2.7. When the L/D of the present resin particles is in the above range, (i) it is possible to provide expanded particles excellent in the thin portion filling property and it is also possible to provide a foamed molded product having excellent surface appearance, and (ii) the L/D of the expanded particles, which are obtained by the contraction of the resin particles caused by the heating in the expanding step (described later), approaches 1, i.e., the anisotropy of the expanded particles is reduced, and the surface appearance of the foamed molded product tends to be more excellent accordingly. The L/D of the resin particles can be measured by the method described in Examples.

The average weight per particle of the present resin particles is preferably 1.0 mg to 3.6 mg, and more preferably 1.0 mg to 2.0 mg. In a case where the average weight per particle of the present resin particles is in the above range, obtaining the resin particles having an L/D of not less than 2.0 tends to be easy.

An aspect of the second melting and kneading step is not particularly limited, provided that it is possible to melt and knead the mixed resin and, if necessary, another resin and/or an additive to obtain resin particles. Examples of a specific aspect of the second melting and kneading step include the following methods (B1) or (B2):

(B1) a method of first mixing or blending the mixed resin and, if necessary, the another resin and/or additive in a mixing device or the like, to prepare a resin composition, then supplying the resin composition to a melting and kneading device to melt and knead the resin composition, thereby obtaining resin particles; and
(B2) a method of supplying the mixed resin and, if necessary, the another resin and/or additive to a melting and kneading device to obtain a resin composition in the melting and kneading device, and also melting and kneading the resin composition, thereby obtaining resin particles.

The mixing device in the method described in (B1) is not particularly limited, but examples thereof include blenders (e.g., a ribbon blender, a flush blender) and mixers (e.g., a tumbler mixer, a super-mixer).

The melting and kneading device in the methods described in (B1) and (B2) is not particularly limited, but examples thereof include extruders, kneaders, a Banbury mixer, and rolls. Due to its excellent productivity and convenience, an extruder is preferable as the melting and kneading device, and a multi-axis extruder (e.g., a biaxial extruder) is more preferable.

In the second melting and kneading step, the temperature at which the mixed resin and if necessary, the another resin and/or additive are melted and kneaded is not particularly limited, provided that the mixed resin and the optionally used another resin are melted at the temperature. For example, the melting and kneading is carried out such that the temperature (resin temperature) of the resins to be melted and kneaded preferably becomes 200°C to 240°C, more preferably becomes 210°C to 230°C, and even more preferably becomes 215°C to 225°C. The resin temperature in the second melting and kneading step being in the above range has the advantage of making it possible to efficiently melt and knead the mixed resin and/or the another resin without pyrolyzing said resins.

The second melting and kneading step preferably includes a particle molding step of molding (granulating) the melted and kneaded resin composition by drawing said resin composition such that said resin composition has the shape of particles which have an L/D of not less than 2.0.

An aspect of the particle molding step is not particularly limited, provided that the melted and kneaded resin composition can be molded into the shape of particles which have an L/D of not less than 2.0. For example, by using a melting and kneading device which is provided with a die and to which a cutting device is connected, it is possible to easily mold the melted and kneaded resin composition into a desired shape in the particle molding step. Specifically, the melted and kneaded resin composition can be molded into the shape of particles which have an L/D of not less than 2.0, by discharging the melted and kneaded resin composition from the nozzle of the die, with which the melting and kneading device is provided, and after the discharge, cutting the resin composition via a cutting device while drawing the resin composition. The shape of resultant resin particles is not particularly limited, provided that the L/D is not less than 2.0, but is preferably the shape of a cylinder, an oval cylinder, or the like because of ease of use in expansion.

(Another resin)

In the second melting and kneading step, in addition to the mixed resin, another resin may be subjected to the melting and kneading. In other words, the present resin particles (and the resin composition) may include another resin. Examples of the another resin subjected to the melting and kneading in the second melting and kneading step (in other words, the another resin contained in the resultant resin particles) include: polyolefin-based resins such as a polypropylene-based resin and polyethylene-based resin; and styrene-based resins such as polystyrene, a styrene/maleic anhydride copolymer, and a styrene/ethylene copolymer. The another resin may also be recycled one (recycled resin) and, is preferably a recycled resin from the viewpoint of reducing the environmental load. When a polyolefin-based resin is used as the another resin, a resin of the same type as that of the polypropylene-based resin (a) or the polyethylene-based resin (b) may be used as the polyolefin-based resin, or a resin of a different type may be used. That is, in the present specification, the "another resin" means a resin which is not used in the first melting and kneading step, and does not necessarily mean a resin other than the polypropylene-based resin (a) and the polyethylene-based resin (b).

The content of the another resin in the resin particles (and the resin composition) obtained by the second melting and kneading step is preferably 20% by weight to 80% by weight, and more preferably 25% by weight to 75% by weight, with respect to 100% by weight of the total of the mixed resin and the another resin. With this configuration, the presence of a plurality of types of resins in the resin particles leads to a wider resin composition distribution, and makes the DSC ratio (described later) less dependent on the expansion temperature. As a result, even though there is no precise reproducibility of the expansion temperature, it is possible to produce expanded particles having approximately the same DSC ratio, in other words, the advantage of making it possible to improve the stability of the quality of expanded particles is provided. The content of the another resin in the present resin particles may be 0% by weight.

The content of each of the resin components in the present resin particles is proportional to the amount of that resin component melted and kneaded in the second melting and kneading step. Thus, in the second melting and kneading step, the mixed resin and the another resin are melted and kneaded in amounts of preferably 20 parts by weight to 80 parts by weight and 20 parts by weight to 80 parts by weight, respectively, and more preferably 25 parts by weight to 75 parts by weight and 25 parts by weight to 75 parts by weight, respectively, such that the total amount of the mixed resin and the another resin is 100 parts by weight.

The present resin particles are preferably polypropylene-based resin particles. In other words, the present resin particles preferably contain not less than 50% by weight of the polypropylene-based resin with respect to 100% by weight of the total of the mixed resin and the another resin that are contained in the present resin particles. The content of the polypropylene-based resin with respect to 100% by weight of the total of the mixed resin and the another resin that are contained in the present resin particles is more preferably not less than 60% by weight, even more preferably not less than 70% by weight, still even more preferably not less than 80% by weight, and particularly preferably not less than 90% by weight. The content of the polypropylene-based resin in the present resin particles can be calculated as the total amount of the polypropylene-based resin (a) contained in the mixed resin and the polypropylene-based resin contained in the another resin.

<Additive>

In the second melting and kneading step, in addition to the mixed resin and the another resin, an additive may be subjected to the melting and kneading. In other words, the resin particles (and the resin composition) obtained by the second melting and kneading step may include an additive. Examples of the additive subjected to the melting and kneading in the second melting and kneading step (in other words, the additive contained in resultant resin particles) include colorants, water-absorbing substances (e.g., (i) polyols such as glycerin and diglycerin, (ii) polyethers such as polyethylene glycol and polyethylene oxide, and (iii) metal borates such as borax and zinc borate), expansion nucleating agents (e.g., inorganic substances such as talc, calcium carbonate, silica, kaolin, barium sulfate, calcium hydroxide, aluminum hydroxide, aluminum oxide, titanium oxide, and zinc borate), antistatic agents (e.g., glycerin monostearate, glycerin mono-/di-stearate, etc.), flame retarders (e.g., a hindered amine-based flame retarder, a bromine-based flame retarder, a phosphoric ester-based flame retardant, a melamine-based flame retarder, etc.), antioxidants (e.g., a hindered phenol-based antioxidant, etc.), thermal stabilizers (e.g., a phosphorus-based thermal stabilizer and a sulfur-based thermal stabilizer), photo stabilizers (such as a benzotriazole-based ultraviolet light absorber, a triazine-based ultraviolet light absorber, an HALS, and/or a hindered amine-based photo stabilizer), crystal nucleating agents, conductive agent (such as carbon, carbon nanotubes, and metal fillers), slip agents, acid scavengers (such as calcium oxide and fatty acid calcium), anti-blocking agents, metal chelating agents (such as IRGANOX MD1024 and ADK STAB CDA-1), lubricants, and antibacterial agents. In particular, it is preferable to add the additive which contributes to the stabilization of resin, such as an antioxidant, in the first melting and kneading step. By using a stabilizer in the first melting and kneading step, even if a recycled resin is used, the degradation of the recycled resin tends to be reduced, and the physical properties tend to be less likely to deteriorate.

The amount of the additive used in the second melting and kneading step is preferably 0.1 parts by weight to 5.0 parts by weight, more preferably 0.2 parts by weight to 4.0 parts by weight, and even more preferably 0.3 parts by weight to 3.5 parts by weight, with respect to 100 parts by weight of the total of the mixed resin and the another resin that are subjected to the second melting and kneading step. In the case where a plurality of types of additives are used in the second melting and kneading step, the amount of the additive used in the second melting and kneading step is intended to mean the total amount of the plurality of types of additives used. The amount of the additive used in the second melting and kneading step (in other words, the content of the additive in the present resin particles) may be 0 parts by weight.

The above another resin and/or additive can also be used in the first melting and kneading step. When the another resin and/or additive is/are used in the first melting and kneading step, the sum of the amount of the another resin and/or additive that is/are used in the first melting and kneading step and the amount of the another resin and/or additive that is/are used in the second melting and kneading step is preferably in the above range. In particular, it is preferable to add the additive which contributes to the stabilization of resin, such as an antioxidant, in the first melting and kneading step. When a recycled resin is used as a raw material with the use of the additive which contributes to the stabilization of resin in the first melting and kneading step, it is possible to reduce the degradation of the recycled resin, and the physical properties of resultant expanded particles tend to be improved.

By producing the present resin particles through the first melting and kneading step and the second melting and kneading step, the present resin particles become resin particles each having a sea-island structure in which a continuous phase and dispersed phases exhibit phase separation, the continuous phase including a polypropylene-based resin which includes the polypropylene-based resin (a), the dispersed phases including a polyethylene-based resin which includes the polyethylene-based resin (b). The dispersion average area per polyethylene-based resin phase, which is the dispersed phase, in the present resin particles is preferably 0.01 $\mu$m$^2$ to 3.00 $\mu$m$^2$, and more preferably 0.02 $\mu$m$^2$ to 1.60 $\mu$m$^2$, in terms of making it possible to provide expanded particles and a foamed molded product that have sufficient strength. The dispersion average area of the polyethylene-based resin phases, which are the dispersed phases, in the resin particles can be measured by the method described in Examples.

<Expanding step>

The present production method includes an expanding step of expanding the resin particles obtained in the second melting and kneading step. The expanding step can be said to be the step of obtaining expanded particles by expanding the present resin particles.

An aspect of the expanding step is not particularly limited, provided that it is possible to expand the present resin particles to obtain expanded particles, but a method including a pressure-release expanding step of expanding the present resin particles in an aqueous dispersion medium is preferable because this method has the advantage of making it possible to stably produce expanded particles.

Examples of a specific aspect of the pressure-release expanding step include a method which includes a dispersing step, a temperature-increasing and pressure-increasing step, a maintaining step, and a releasing step. By citing such an aspect as an example, each of the steps that can be included in the expanding step (which can hereinafter be referred to as the "present expanding step") in accordance with an embodiment of the present invention is described here.

(Dispersing step)

The present expanding step preferably includes a dispersing step. The dispersing step is the step of preparing a dispersion slurry in which the present resin particles and a blowing agent and, if necessary, a dispersion agent and/or a dispersion auxiliary agent are dispersed in an aqueous dispersion medium.

A vessel used in the dispersing step is not particularly limited, but is preferably a vessel which can withstand the expansion temperature and the expansion pressure described later. For example, the vessel is preferably a pressure-resistant vessel, and more preferably an autoclave-type pressure-resistant vessel. The vessel may also be provided with a stirrer therein.

The aqueous dispersion medium is not particularly limited, provided that the aqueous dispersion medium makes it possible to uniformly disperse the resin particles, the blowing agent, and the like.

In terms of being possible to stably producing expanded particles, it is preferable to use, as the aqueous dispersion medium, pure water, such as RO water (water purified by the reverse osmosis membrane method), distilled water, or deionized water (water purified by an ion exchange resin), ultrapure water, or the like.

Examples of the blowing agent include (a) inorganic blowing agents such as (a-1) inorganic gases such as nitrogen, carbon dioxide, and air (mixture of oxygen, nitrogen, and carbon dioxide) and (a-2) water, and (b) organic blowing agents such as (b-1) saturated hydrocarbons having 3 to 5 carbon atoms such as propane, normal butane, isobutane, normal pentane, isopentane, and neopentane, (b-2) ethers such as dimethyl ether, diethyl ether, and methyl ethyl ether, and (b-3) halogenated hydrocarbons such as monochloromethane, chloroethane, and hydrofluoroolefin.

In the present production method for producing the present expanded particles, it is preferable to use a dispersion agent (e.g., an inorganic substance such as tricalcium phosphate and kaolin) and a dispersion auxiliary agent (e.g., an anionic surfactant such as sodium dodecylbenzenesulfonate or sodium alkanesulfonate). This configuration makes it possible to reduce agglomeration (which can hereinafter be referred to as blocking) of resin particles, and increase the stability of the dispersion slurry in the vessel. This provides the advantage of making it possible to stably produce expanded particles.

Regarding each of the aqueous dispersion medium and the blowing agent, the above examples may be used singly, or two or more thereof may be used in combination.

(Temperature-increasing and pressure-increasing step and maintaining step)

The present expanding step preferably further includes, after the dispersing step and before the releasing step: (i) a temperature-increasing and pressure-increasing step of increasing the internal temperature of the vessel to a certain temperature and increasing the internal pressure of the vessel to a certain pressure and (ii) a maintaining step of maintaining the internal temperature and the internal pressure of the vessel at the certain temperature and the certain pressure. The maintaining step is preferably carried out after the temperature-increasing and pressure-increasing step. In the present specification, (a) the certain temperature in the temperature-increasing and pressure-increasing step and the maintaining step can be referred to as an expansion temperature and (b) the certain pressure in the temperature-increasing and pressure-increasing step and the maintaining step can be referred to as an expansion pressure.

The expansion temperature varies depending on, for example, the type and added amount of the base resin and the additive which are contained in the resin particles, and the type and added amount of the blowing agent, and therefore cannot be uniformly specified. The expansion temperature is preferably from the melting point of the resin particles to be subjected to the expanding step - 20.0°C to said melting point + 20.0°C, more preferably from said melting point - 10.0°C to said melting point + 15.0°C, and even more preferably from said melting point - 5.0°C to said melting point + 13.0°C.

The expansion pressure is preferably 0.5 MPa (gage pressure) to 10.0 MPa (gage pressure), more preferably 1.0 MPa (gage pressure) to 5.0 MPa (gage pressure), and more preferably 1.5 MPa (gage pressure) to 3.0 MPa (gage pressure). When the expansion pressure is not less than 0.5 MPa (gage pressure), it is possible to obtain expanded particles having suitable density.

In the maintaining step, the period of time (maintaining time) for which the dispersion slurry in the vessel is maintained at around the expansion temperature and the expansion pressure is not particularly limited. The maintaining time is preferably 10 minutes to 60 minutes, more preferably 12 minutes to 50 minutes, and even more preferably 15 minutes to 40 minutes.

(Releasing step)

With the releasing step, it is possible to expand the resin particles, and as a result, expanded particles are obtained. The releasing step can also be said to be the step of making one end of the vessel open so as to release the dispersion slurry inside the vessel into a region (space) having a pressure lower than the expansion pressure (i.e., the internal pressure of the vessel).

In the releasing step, the "region having a pressure lower than the expansion pressure" is intended to mean a "region under a pressure lower than the expansion pressure" or a "space under a pressure lower than the expansion pressure", and can also be described as "in an atmosphere having a pressure lower than the expansion pressure". The region having a pressure lower than the expansion pressure is not particularly limited, provided that the pressure is lower than the expansion pressure. For example, said region may be a region under atmospheric pressure.

In this manner, the step of producing expanded particles from resin particles through a single expansion is referred to as a "first-step expansion process", and the expanded particles thus obtained are referred to as "first-step expanded particles".

(Second-step expansion process)

In order to obtain expanded particles having a high expansion rate, the present expanding step preferably includes the step of expanding again the first-step expanded particles obtained in the first-step expansion process. The step of expanding again the first-step expanded particles is referred to as a "second-step expansion process", and expanded particles obtained by the second-step expansion process are referred to as "second-step expanded particles".

A specific method of the second-step expansion process is not particularly limited, but a known method can be employed.

<Physical properties of expanded particles>

Here is a detailed description of the physical properties that can be possessed by expanded particles (present expanded particles) obtained by the present production method.

(DSC ratio of expanded particles)

The DSC ratio of the present expanded particles is not particularly limited, but is preferably 10.0% to 40.0%, more preferably 15.0% to 30.0%, and even more preferably 18.0% to 25.0%. The DSC ratio of expanded particles being not less than 10.0% has the following advantage: there is no possibility of formation of wrinkles on the surfaces of expanded particles and it is possible to obtain a foamed molded product having excellent mechanical properties including compressive strength. On the other hand, the DSC ratio of expanded particles being not more than 40.0% has the following advantage: the expanded particles can exhibit excellent expandability and swellability, and it is possible to provide a foamed molded product having excellent internal fusibility with use of a low molding pressure. The DSC ratio of the expanded particles can be measured by the method described in Examples.

The present expanded particles preferably have at least three melting peaks in a DSC curve, as illustrated in Fig. 1, the DSC curve being obtained with use of a differential scanning calorimeter, by increasing the temperature of the present expanded particles from 40°C to 220°C at a temperature increase rate of 10°C/minute.

Here is a more detailed description of Fig. 1. Fig. 1 is a diagram illustrating an example of a DSC curve obtained by increasing the temperature of the polypropylene-based resin expanded particles from 40°C to 220°C at a temperature increase rate of 10°C/minute. In Fig. 1, a straight line a is the straight line connecting the point at 100°C and the local maximum point which is located between the melting peak at the highest temperature and the melting peak adjacent to (on the low temperature side of) the melting peak at the highest temperature, and a straight line b is the straight line connecting said local maximum point and the point which represents the temperature after the end of melting. Ql is a region which is on the low temperature side and which is bounded by the DSC curve and the straight line a. The quantity of heat calculated from the region Ql is a low-temperature-side melting heat quantity. Qh is a region which is on the high temperature side and which is bounded by the DSC curve and the straight line b. The quantity of heat calculated from the region Qh is a high-temperature-side melting heat quantity.

The present expanded particles, which include the polypropylene-based resin (a) and the polyethylene-based resin (b), are expanded particles having three melting peaks as illustrated in Fig. 1, namely, two melting peaks ascribed to the polypropylene-based resin and one melting peak ascribed to the polyethylene-based resin.

(Expansion rate of expanded particles)

The expansion rate of the present expanded particles is not particularly limited, but is preferably 3.0 times to 50.0 times, more preferably 10.0 times to 30.0 times, and even more preferably 15.0 times to 27.0 times. The expansion rate of expanded particles being in the above range has the advantage of making it possible to obtain a lightweight foamed molded product with high production efficiency and making it possible to provide a foamed molded product having sufficient strength. The expansion rate of expanded particles can be measured by the method described in Examples. In addition, when second-step expansion is carried out in the expanding step, the expansion rate of expanded particles is intended to mean the expansion rate of the second-step expanded particles.

(L/D of expanded particles)

The L/D of the present expanded particles is more preferably 0.8 to 1.2, even more preferably 0.9 to 1.1, and particularly preferably 1.0. When the L/D of the present expanded particles is in the above range, it is possible to provide a foamed molded product having excellent surface appearance. The L/D of the expanded particles can be measured by the method described in Examples.

(Dispersion average area and aspect ratio of polyethylene-based resin phases in expanded particles)

The present expanded particles are expanded particles obtained by expanding the present resin particles each having the sea-island structure described above. Thus, also the present expanded particles are expanded particles each having a sea-island structure in which a continuous phase and dispersed phases exhibit phase separation, the continuous phase including a polypropylene-based resin which includes the polypropylene-based resin (a), the dispersed phases including a polyethylene-based resin which includes the polyethylene-based resin (b).

Fig. 3 shows an example of the transmission electron microscope image of the present expanded particles. In Fig. 3, a weakly stained phase represents a continuous phase including the polypropylene-based resin (a) and a strongly stained phase represents a dispersed phase including the polyethylene-based resin (b).

The dispersion average area per polyethylene-based resin phase, which is the dispersed phase, in the present expanded particles is preferably 0.01 $\mu m^2$ to 3.00 $\mu m^2$, and more preferably 0.02 $\mu m^2$ to 1.60 $\mu m^2$, in terms of making it possible to provide expanded particles and a foamed molded product that have sufficient strength. The dispersion average area of the polyethylene-based resin phases, which are the dispersed phases, in the expanded particles can be measured by the method described in Examples.

Since the present expanded particles each have an sea-island structure and are obtained by expanding the present resin particles having a predetermined L/D, the present expanded particles each have a sea-island structure in which the polyethylene-based resin phases, which are the dispersed phases, have a relatively high aspect ratio.

Specifically, the aspect ratio per polyethylene-based resin phase, which is the dispersed phase, in the present expanded particles is preferably 7.5 to 20.0, more preferably 8.0 to 18.0, even more preferably 9.0 to 16.0, and particularly preferably 9.5 to 15.5, in terms of: making it possible to provide expanded particles having an excellent filling property with respect to a thin portion; having excellent surface appearance; and making it possible to provide a polypropylene-based foamed molded product having no irregularities in a thin portion thereof. The aspect ratio of the polyethylene-based resin phases, which are dispersed phases, in the expanded particles can be measured by the method described in Examples.

The inventors of the present invention found that surprisingly, expanded particles which each have the above sea-island structure and which each have the aspect ratio of the polyethylene-based resin phases, which are the dispersed phases, in the above range have an excellent filling property with respect to a mold which has a thin portion formation site. Thus, the present expanded particles can also be expressed as follows: polypropylene-based expanded particles each having a sea-island structure in which a continuous phase and dispersed phases exhibit phase separation, the continuous phase including the polypropylene-based resin (a), the dispersed phases including the polyethylene-based resin (b), the dispersed phases having an aspect ratio of 7.5 to 20.0.

The present expanded particles having the above configuration can suitably be produced by the present production method. However, as a matter of course, the present expanded particles are not limited to expanded particles produced by said method, provided that the expanded particles have the above configuration.

The present expanded particles may include, in addition to the polypropylene-based resin (a) and the polyethylene-based resin (b), another resin and/or an additive. Specific aspects of the components (e.g., the polypropylene-based resin (a), the polyethylene-based resin (b), and the another resin and/or additive) that can be contained in the present expanded particles are the same as those described in the section on resin particles. Thus, the descriptions in the section are employed, with descriptions of the components omitted here.

<Another method for producing expanded particles>

In the above description, a method for producing the present expanded particles is described by citing, as an example, the method which includes the first melting and kneading step and the second melting and kneading step. However, a method for producing the present expanded particles is not limited to such a method, provided that the method makes it possible to obtain polypropylene-based expanded particles that each have the sea-island structure in which a continuous phase and dispersed phases exhibit phase separation, the continuous phase including the polypropylene-based resin (a), the dispersed phases including the polyethylene-based resin (b), the dispersed phases having an aspect ratio of 7.5 to 20.0.

Besides the method including the first melting and kneading step and the second melting and kneading step, examples (other production methods) of the method for producing the present expanded particles include the method of mixing (melting and kneading) the raw materials of the expanded particles, namely the polypropylene-based resin (a), the polyethylene-based resin (b), and the another resin and/or additive, with use of a multi-axis extruder having at least two screws that have a ratio (L/D) between the effective screw length L and the screw diameter D of 30 to 40. Such an aspect is also encompassed in an embodiment of the present invention.

Thus, a method for producing expanded particles in accordance with another embodiment of the present invention can be expressed as follows: a method for producing polypropylene-based expanded particles, the method including as melting and kneading step of melting and kneading a polypropylene-based resin (a), a polyethylene-based resin (b), and another resin and/or additive with use of a multi-axis extruder having at least two screws that have a ratio (L/D) between the effective screw length L and the screw diameter D of not less than 30, to obtain polypropylene-based resin particles; and an expanding step of expanding the polypropylene-based expanded particles, the polypropylene-based resin particles having an L/D of not less than 2.0.

(Polypropylene-based foamed molded product)

The present foamed molded product is obtained by molding (e.g., in-mold foam molding) the present expanded particles. The present foamed molded product can be said to be a foamed molded product which has the present expanded particles as a raw material.

In a case of molding a foamed molded product which has a thin portion, it is necessary to use a mold which has a thin portion formation site in the molding. The thin portion formation site is a very narrow (e.g., a width of approximately 5 mm) space in accordance with the dimensions of the thin portion of a resultant foamed molded product. With the case of using ordinary expanded particles to fill a mold having a thin portion formation site in order to mold a foamed molded product having a thin portion, there is a problem of the thin portion formation site being insufficiently filled with the expanded particles, and the thin portion of a resultant foamed molded product having poor appearance accordingly, with the presence of obvious inter-particle dimples. On the other hand, since the present foamed molded product is obtained by using, as a raw material, the present expanded particles, which have an excellent filling property with respect to a mold having a thin portion formation site, the present foamed molded product has a thin portion which has excellent appearance, with no inter-particle dimples. The present foamed molded product may also have a thin portion. Further, the present expanded particles can be suitably used for producing a foamed molded product which has a thin portion.

<Method for producing foamed molded product>

Provided that a method for producing the present foamed molded product makes it possible to mold the present expanded particles (preferably by in-mold foam molding) to obtain an expanded molded product, other aspects of the method are not particularly limited, but a known method can be applied. As the method for producing the present foamed molded product, the production method described in the section <Method for producing foamed molded product> of International Publication No. WO2022/149538 can be suitably employed, for example.

[Others]

An embodiment of the present invention may include features below.
<1> A method for producing polypropylene-based expanded particles, the method including: a first melting and kneading step of melting and kneading a polypropylene-based resin (a) and a polyethylene-based resin (b) to obtain a mixed resin; a second melting and kneading step of melting and kneading the mixed resin to obtain polypropylene-based resin particles; and an expanding step of expanding the polypropylene-based resin particles, the polypropylene-based resin particles having an L/D of not less than 2.0.

<2> The method described in < 1 >, in which in the first melting and kneading step, 60 parts by weight to 99 parts by weight of the polypropylene-based resin (a) and 1 part by weight to 40 parts by weight of the polyethylene-based resin (b) are melted and kneaded such that a total amount of the polypropylene-based resin (a) and the polyethylene-based resin (b) is 100 parts by weight.

<3> The method described in <1> or <2>, in which the expanding step includes a pressure-release expanding step of expanding the polypropylene-based resin particles in an aqueous dispersion medium.

<4> The method described in any one of <1> to <3>, in which the polypropylene-based resin (a) and/or the polyethylene-based resin (b) include(s) a recycled resin.

<5> The method described in any one of <1> to <4>, in which the polypropylene-based resin particles each have an sea-island structure in which a continuous phase and dispersed phases exhibit phase separation, the continuous phase including the polypropylene-based resin (a), the dispersed phases including the polyethylene-based resin (b), and the dispersed phases have a dispersion average area per dispersed phase of 0.01 $\mu m^2$ to 3.00 $\mu m^2$.

<6> The method described in any one of <1> to <5>, in which the polypropylene-based resin (a) has a melting point of 135°C to 160°C.

<7> The method described in any one of <1> to <6>, in which the polyethylene-based resin (b) has a melting point of 100°C to 140°C.

<8> The method described in any one of <1> to <7>, in which the polyethylene-based resin (b) has a density of 0.900 $g/cm^3$ to 0.970 $g/cm^3$.

<9> Polypropylene-based expanded particles having a sea-island structure in which a continuous phase and dispersed phases exhibit phase separation, the continuous phase including a polypropylene-based resin (a), the dispersed phases including a polyethylene-based resin (b), the dispersed phases having an aspect ratio of 7.5 to 20.0.

<10> The polypropylene-based expanded particles described in <9>, in which the polypropylene-based resin (a) and/or the polyethylene-based resin (b) include(s) a recycled resin.

<11> The polypropylene-based expanded particles described in <9> or <10>, in which the polypropylene-based expanded particles have at least three melting peaks in a DSC curve, the DSC curve being obtained with use of a differential scanning calorimeter, by increasing a temperature of the polypropylene-based expanded particles from 40°C to 220°C at a temperature increase rate of 10°C/minute.

<12> The polypropylene-based expanded particles described in any one of <9> to <11>, in which the dispersed phases have a dispersion average area per dispersed phase of 0.01 $\mu m^2$ to 3.00 $\mu m^2$.

<13> The polypropylene-based expanded particles described in any one of <9> to <12>, in which the polypropylene-based expanded particles have a DSC ratio of 10.0% to 40.0%.

<14> The polypropylene-based expanded particles described in any one of <9> to <13>, in which the polypropylene-based expanded particles have an L/D of 0.8 to 1.2.

<15> A method for producing a polypropylene-based foamed molded product, the method including a step of molding polypropylene-based expanded particles obtained by the method described in any one of <1> to <8> or the polypropylene-based expanded particles described in any one of <9> to <14>.

<16> A polypropylene-based foamed molded product obtained by molding polypropylene-based expanded particles obtained by the method described in any one of <1> to <8> or the polypropylene-based expanded particles described in any one of <9> to <14>.

<17> The method described in any one of <1> to <8>, in which the polypropylene-based resin (a) is at least one selected from the group including a homopolymer of propylene, and a block copolymer or a random copolymer of propylene and a monomer other than propylene.

<18> The polypropylene-based expanded particles described in any one of <9> to <14>, in which the polypropylene-based resin (a) is at least one selected from the group including a homopolymer of propylene, and a block copolymer or a random copolymer of propylene and a monomer other than propylene.

<19> The method described in any one of <1> to <8> and <17>, in which the polypropylene-based resin particles include: a mixed resin that contains the polypropylene-based resin (a) and the polyethylene-based resin (b); and another resin, and the polypropylene-based resin particles contain not less than 50% by weight of the polypropylene-based resin (a) with respect to 100% by weight of the total of the mixed resin and the another resin that are contained in the polypropylene-based resin particles.

<20> The method described in any one of <1> to <8> and <17>, in which the polypropylene-based resin particles include: a mixed resin that contains the polypropylene-based resin (a) and the polyethylene-based resin (b); and another resin, and the polypropylene-based resin particles contain 20% by weight to 80% by weight of the another resin with respect to 100% by weight of the total of the mixed resin and the another resin that are contained in the polypropylene-based resin particles.

<21> The polypropylene-based expanded particles described in any one of <9> to <14> and <18>, in which the polypropylene-based expanded particles have an expansion rate of 3.0 times to 50.0 times.

Examples

The following description will discuss the present invention in detail through Examples. However, the technical scope of the present invention is not limited to these Examples.

[Materials]

The substances used in Examples and Comparative Examples are described below.

<Mixed resin>

Polypropylene-based resin (a): an ethylene/propylene random copolymer [ethylene content: 9%, melting point: 151°C, MFR: 7 g/10 minutes]
Polyethylene-based resin (b): a high-density polyethylene (HDPE) [melting point: 126°C, MFR: 0.15 g/10 minutes]
Recycled resins were used as the polypropylene-based resin (a) and the polyethylene-based resin (b).

<Another resin>

(Recycled resins)

recycled polypropylene-based resin: an ethylene/propylene random copolymer [ethylene content: 9%, melting point: 151°C, MFR: 7 g/10 minutes]

recycled polyethylene-based resin: a high-density polyethylene (HDPE) [melting point: 126°C, MFR: 0.15 g/10 minutes]

(Non-recycled resin)

non-recycled polypropylene-based resin: a 1-butene/ethylene/propylene random copolymer [ethylene content: 1%, 1-butene content: 3%, melting point: 148°C, MFR: 10 g/10 minutes]

<Additives>

Carbon black [primary particle size: 20 nm to 100 nm]
Talc [Talcan Powder PK-S, manufactured by Hayashi-Kasei Co., Ltd.]
Glycerin [PURIFIED GLYCERIN D, manufactured by Lion Corporation]
Hindered amine-based flame retarder [NOR116, manufactured by BASF]

[Measurement method]

An evaluation method carried out in Examples and Comparative Examples are described below.

(Melting point measurement of polypropylene-based resin and polyethylene-based resin)

The melting points of the polypropylene-based resin and the polyethylene-based resin were measured using a differential scanning calorimeter [DSC7020, manufactured by Hitachi High-Tech Science Corporation]. The specific measurement procedure was as follows: (1) A quantity of 5 mg to 6 mg of a resin to be measured was weighed out, and the resin was melted by increasing the temperature of the resin from 40°C to 220°C at a temperature increase rate of 10°C/minute; (2) the melted resin was crystallized by lowering the temperature from 220°C to 40°C at a temperature decrease rate of 10°C/minute; (3) the temperature was further increased from 40°C to 220°C at a temperature increase rate of 10°C/minute; (4) the temperature of the peak (melting peak) of the DSC curve obtained at the second temperature increase (i.e., in (3)) was determined as the melting point Tm of the polypropylene-based resin or the polyethylene-based resin.

(MFR measurement of polypropylene-based resin and polyethylene-based resin)

With use of the melt mass flow rate meter described in JIS K 7210, the MFR of the polypropylene-based resin was measured under the following conditions: the diameter of an orifice is 2.0959 ± 0.005 mm; the length of the orifice is 8.000 ± 0.025 mm; the load is 2,160 g; and the temperature is 230 ± 0.2°C. Further, with use of the melt mass flow rate meter described in JIS K 7210, the MFR of the polyethylene-based resin was measured under the following conditions: the diameter of an orifice is 2.0959 ± 0.005 mm; the length of the orifice is 8.000 ± 0.025 mm; the load is 2160 g; and the temperature is 190 ± 0.2°C

(L/D measurement of resin particles and expanded particles)

The L/D per particle of 10 randomly selected resin particles or expanded particles was calculated by the method below. The arithmetic average value of the L/D per particle for the 10 resin particles or expanded particles was determined as the L/D of the resin particles or the expanded particles. The specific method for measuring the L/D per particle of the resin particles and the expanded particles was as follows: The length of the longest portion of a single resin particle or a single expanded particle of interest was defined as L, and the maximum diameter and the minimum diameter of the resin particle or the expanded particle in a cross section perpendicular to the direction of L were defined as Dmax and Dmin, respectively; and the L/D per particle of the resin particles or the expanded particles was calculated on the basis of the following formula:

L/D per particle of resin particles or expanded particles = L / ((Dmax + Dmin) / 2)

(DSC ratio measurement of expanded particles)

The DSC ratio of the expanded particles was measured using a differential scanning calorimeter [DSC7020, manufactured by Hitachi High-Tech Science Corporation]. The specific measurement procedure was as follows: (1) a quantity of 5 mg to 6 mg of the expanded particles were weighed out; (2) the expanded particles was melted by increasing the temperature of the expanded particles from 40°C to 220°C at a temperature increase rate of 10°C/minute; (3) in the DSC curve of the expanded particles obtained in the process (2), (3a) the local maximum point located between the melting peak at the highest temperature and the melting peak adjacent to (on the low temperature side of) the melting peak at the highest temperature was connected, by a straight line a, with the point representing a temperature of 100°C, and (3b) said local maximum point was connected, by a straight line b, with the point representing the temperature after the end of melting; (4) (4a) the quantity of heat calculated from the region on the high temperature side bounded by the DSC curve and the line segment b, which connected said local maximum point and the point representing the temperature after the end of melting, was determined as a high-temperature-side melting heat quantity (Qh), (4b) the quantity of heat calculated from the region on the low temperature side bounded by the DSC curve and the line segment a, which connected said local maximum point and the point representing a temperature of 100°C, was determined as a low-temperature-side melting heat quantity (Ql), (4c) the sum of Qh and Q1 was determined as the total melting heat quantity (= Qh + Q1); and (5) the DSC ratio of the expanded particles was calculated on the basis of the following formula:

$$\text{DSC ratio (\%) of expanded particles} = [Qh / (Qh + Ql)] \times 100.$$

(Expansion rate measurement of expanded particles)

The expansion rate of the expanded particles was measured in the following procedure: (1) a quantity of 3 g to 10 g of the expanded particles was weighed out, and dried at 60°C for 6 hours; (2) the expanded particles after the drying were subjected to conditioning in a room at 23°C and 50% humidity (left to stand in the room), and then the weight w (g) of the expanded particles were measured; (3) the expanded particles were submerged in ethanol contained in a graduated cylinder, and the volume v of the expanded particles ($cm^3$) was measured from the amount of increase in the water level of the graduated cylinder; (4) the true specific gravity of the expanded particles was calculated on the basis of the following formula:

True specific gravity $\rho b$ ($g/cm^3$) of expanded particles = w (g) / v ($cm^3$);

(5) from the ratio between the density $\rho r$ ($g/cm^3$) of the resin particles before expansion and the true specific gravity $\rho b$ of the expanded particles, the expansion rate of the expanded particles was calculated on the basis of the following formula:

$$\text{Expanding ratio of expanded particles } K = \rho r / \rho b.$$

The volume measurement method as described in (3) above can be referred to as "submersion method". In the following, the density $\rho r$ of the resin particles before expansion was 0.9 $g/cm^3$ for both Examples and Comparative Examples.

(Dispersion average area measurement of polyethylene-based resin phases in resin particles)

The dispersion average area of the polyethylene-based resin phases in the resin particles was measured in the following procedure: (1) a resin particle was cut at an arbitrary point; (2) a cross section of the cut resin particle was stained with $RuO_4$; (3) a photograph of the cross section of the resin particle was taken at a magnification of 40,000x with a transmission electron microscope [device: H-7650 manufactured by Hitachi High-Technologies Corporation, acceleration voltage: 100 kV]; (4) in the obtained transmission electron micrograph, 10 polyethylene-based resin phases (phases strongly stained with the $RuO_4$) were arbitrarily extracted, the areas of the phases were measured, and the arithmetic average value of the areas was determined as the dispersion average area of the polyethylene-based resin phases in the resin particle.

(Dispersion average area measurement of polyethylene-based resin phase in expanded particles)

The dispersion average area of the polyethylene-based resin phases in the expanded particles was measured in the following procedure: (1) an expanded particle was cut at an arbitrary point; (2) a cross section of the cut expanded particle was stained with $RuO_4$; (3) a photograph of the cross section of the expanded particle was taken at a magnification of 40,000x with a transmission electron microscope [device: H-7650 manufactured by Hitachi High-Technologies Corporation, acceleration voltage: 100 kV]; (4) in the obtained transmission electron micrograph, 10 polyethylene-based resin phases (phases strongly stained with the $RuO_4$) were arbitrarily extracted, the areas of the phases were measured, and the arithmetic average value of the areas was determined as the dispersion average area of the polyethylene-based resin phases in the expanded particle.

(Aspect ratio of the polyethylene-based resin phases in expanded particles)

The aspect ratio of the polyethylene-based resin phases in the expanded particles was measured in the following procedure: (1) in a transmission electron micrograph obtained in the above process (Dispersion average area measurement of polyethylene-based resin phases in expanded particles), 10 polyethylene-based resin phases were arbitrarily extracted, and for each of the phases, the length Y of the longest portion and the length X of the maximum diameter in a direction perpendicular to the direction of Y were measured; (2) an aspect ratio A per particle of the polyethylene-based resin phases was calculated on the basis of the following formula, and the arithmetic average value of the aspect ratio A was determined as the aspect ratio of the polyethylene-based resin phases in the expanded particles:

Aspect ratio A per particle of polyethylene-based resin phases = Y / X.

(Density measurement of foamed molded product)

A method for measuring the density (foamed molded product density) of a foamed molded product was as presented by the following (1) to (3): (1) on the basis of the dimensions of a foamed molded product including a thin portion, the volume V (L) of the foamed molded product was calculated; (2) in addition, the weight W (g) of the foamed molded product was measured; (3) the density of foamed molded product was calculated on the basis of the following formula:

$$\text{Density of foamed molded product (g/L)} = \text{W / V.}$$

(Evaluation of thin portion filling property)

The thin portion of the obtained foamed molded product was visually observed, and the thin portion filling property of the expanded particles was assessed on the basis of the following criteria.

1 (good): There are few inter-particle dimples (inter-particle gap between expanded particles) at a corner of the thin portion.
0 (poor): There is an obvious inter-particle dimple at a corner of the thin portion.

There being few inter-particle dimples at a corner of the thin portion means that even a corner of the thin portion is filled with the expanded particles, and there being an obvious inter-particle dimple at a corner of the thin portion means that a corner of the thin portion is not filled with the expanded particles.

(Surface appearance evaluation of foamed molded product)

A side of the obtained foamed molded product surface was visually observed, and the surface properties of said foamed molded product were assessed on the basis of the following criteria. The number being greater is intended to mean that there are a fewer inter-particle dimples, surface irregularities, wrinkles, and contractions, and the appearance is excellent.
1 (good): There are few inter-particle dimples, the surface irregularities are not obvious, and there is no wrinkle or contraction, and the appearance is excellent. 0 (poor): Inter-particle dimples, surface irregularities, contractions, or wrinkles are observed.

[Example 1]

(Preparation of mixed resin)

A quantity of 95 parts by weight of the polypropylene-based resin (a) and 5 parts by weight of the polyethylene-based resin (b) were blended together using a tumbler mixer. A mixture obtained by the blending was melted and kneaded using a biaxial extruder at a resin temperature of 220°C, and an extruded strand was water-cooled in a water tank which was 2 m in length, and then cut, and particles of the mixed resin (5.0 mg/particle) was produced accordingly (first melting and kneading step). These particles were used as a mixed resin 1.

(Preparation of resin particles)

The mixed resin 1 was blended with another resin and additives described in Table 1 with use of a tumbler mixer, and a mixture was obtained accordingly. The mixture thus obtained was melted and kneaded at a resin temperature of 220°C with use of a biaxial extruder which had screws that had a ratio (L/D) between the effective screw length L and the screw diameter D of 28 (second melting and kneading step). Subsequently, the melted and kneaded product was extruded in strand form from the biaxial extruder through a die with a hole which was 1.2 mm in diameter. A strand thus obtained was water-cooled, and the strand was then cut so as to have an L/D of 2.5, while the resin composition was drawn by adjusting the take-up speed of a pelletizer and the number of revolutions of a cutter. Accordingly, resin particles which had a length L of the longest portion of 2.15 mm, an average value ((Dmax + Dmin) / 2) of the maximum diameter Dmax and the minimum diameter Dmin of 0.86 mm, an L/D of 2.5, and an average weight of 1.2 mg/particle were obtained. The dispersion average area of the polyethylene-based resin phases of the obtained resin particles was measured. The results are shown in Table 1.

(Production of expanded particles)

A quantity of 100 parts by weight (2.4 kg) of the obtained resin particles, 200 parts by weight of pure water, 0.22 parts by weight of kaolin (ASP170, manufactured by BASF) as a dispersion agent, and 0.38 parts by weight of an aqueous sodium dodecylbenzenesulfonate solution [NEOPELEX G-15 manufactured by Kao Corporation] as a dispersion auxiliary agent were put into a pressure-resistant autoclave. Subsequently, while stirring the raw materials in the pressure-resistant autoclave, 4 parts by weight of carbon dioxide was introduced into the pressure-resistant autoclave as an blowing agent, and a dispersion slurry was prepared accordingly (dispersing step). The internal temperature of the pressure-resistant autoclave was then heated to the expansion temperature described in Table 1. After the internal temperature was maintained at the expansion temperature for 10 minutes, carbon dioxide was additionally impregnated into the pressure-resistant autoclave, and the internal pressure of the pressure-resistant autoclave was increased to an expansion pressure of 2.2 MPa (gage pressure) (temperature-increasing and pressure-increasing step). Subsequently, after the internal temperature and the internal pressure of the pressure-resistant autoclave were maintained at the expansion temperature and the expansion pressure for 20 minutes (maintaining step), the valve in the lower part of the pressure-resistant autoclave was opened, and the dispersion slurry was released into an expansion cylinder under atmospheric pressure through an orifice having an opening diameter of 3.6 mm, and expanded particles were obtained accordingly (releasing step). In doing so, in order to prevent the internal pressure of the pressure-resistant closed vessel from decreasing from the expansion pressure while the dispersion slurry was being released, carbon dioxide was additionally impregnated into the pressure-resistant closed vessel so that the internal pressure of the pressure-resistant closed vessel was maintained at 2.2 MPa (gage pressure). The obtained expanded particles had a sea-island structure which consisted of a continuous phase including the polypropylene-based resin (a) and dispersed phases including the polyethylene-based resin (b). With respect to the obtained expanded particles, the DSC ratio, the expansion rate, the dispersion average area of the polyethylene-based resin phases, and the aspect ratio of the polyethylene-based resin phases were measured. The results are shown in Table 1.

(Preparation of second-step expanded particles)

After the obtained expanded particles were dried at 80°C, the expanded particles were put into a pressure-resistant vessel. In the pressure-resistant vessel, by causing the expanded particles to be impregnated with compressed air, the internal pressure of the expanded particles were set at 0.3 MPa (absolute pressure). By bringing the expanded particles, to which the internal pressure was applied, into contact with steam at 0.07 MPa (gage pressure), second-step expanded particles were obtained. With respect to the obtained second-step expanded particles, the expansion rate was 26.1 times, and the L/D was 1.0.

(Preparation of foamed molded product)

By putting the obtained second-step expanded particles into a pressure-resistant closed vessel, introducing air into the pressure-resistant closed vessel, and thus causing the expanded particles in the pressure-resistant closed vessel to be impregnated with the compressed air, an internal pressure of 0.20 MPa (absolute pressure) was applied to the expanded particles. The expanded particles, to which the internal pressure was applied, were used to fill the molding space of a mold which was placed in a molding machine (P-150N molding machine, manufactured by Toyo Machinery and Metal). Used as the mold was a mold which had a movable mold that can be driven and a fixed mold. In the mold, a molding space can be formed in which it is possible to form a foamed molded product 100 illustrated in Fig. 2 via the movable mold and the fixed mold. The foamed molded product 100 is a box-shaped foamed molded product having six thin portions 3, and the outer dimensions of the foamed molded product 100 were 350 mm in length, 320 mm in width, and 175 mm in height. The thickness of the vertical wall portion 1 along the length was 20 mm, the thickness of the vertical wall portion 1 along the width was 20 mm, and the bottom portion 2 thickness was 10 mm. Each of the thin portions 3 had a plate shape which had a thickness gradient from the top to the bottom, and had a length of 80 mm, a maximum thickness of 10 mm and a minimum thickness of 5 mm, and a height of 100 mm. The expanded particles with which the mold was filled were heated with steam at 0.32 MPa (gage pressure), and the expanded particles were thereby melted. The surface of the mold and the surface of the molded product were then cooled using cooling water. A foamed molded product was thus obtained. With respect to the obtained foamed molded product, the density, the thin portion filling property, and the surface appearance were measured and evaluated. The results are shown in Table 1.

[Examples 2 to 9]

Mixed resin, resin particles, expanded particles, and a foamed molded product were obtained by methods similar to those of Example 1, except that the mixing amounts of the respective components, the L/D of the resin particles, and/or the expansion conditions were changed as described in Table 1, and the physical properties thereof were measured and evaluated. The results are shown in Table 1.
In Examples 4 to 9, a mixed resin 2 was used as the mixed resin, which was a raw material of the resin particles. The mixed resin 2 was prepared by operations similar to those for the mixed resin 1, except that 70 parts by weight of the polypropylene-based resin (a) and 30 parts by weight of the polyethylene-based resin (b) were mixed in the first melting and kneading step.

[Comparative Examples 1 and 2]

Resin particles were obtained by melting and kneading the polypropylene-based resin (a), the polyethylene-based resin (b), and additives in the respective mixing amounts described in Table 1, by the method described in the section (Preparation of resin particles) of Example 1. In Comparative Examples 1 and 2, since a mixed resin was not used, the first melting and kneading step and the second melting and kneading step were not carried out. Expanded particles and a foamed molded product were obtained using the obtained resin particles by the methods similar to those of Example 1, except that the expansion conditions were changed as described in Table 1, and the physical properties thereof were measured and evaluated. The results are shown in Table 1.

[Comparative Example 3]

The mixed resin 1 and additives in the respective mixing amounts described in Table 1 were melted and kneaded by the method described in (Preparation of resin particles), and the melted and kneaded product was extruded in strand form through a die with a hole which was 1.2 mm in diameter. A strand thus obtained was water-cooled, and the strand was then cut so as to have an L/D of 1.5, while the resin composition was drawn by adjusting the take-up speed of a pelletizer and the number of revolutions of a cutter. Accordingly, resin particles which had an average weight of 1.2 mg/particle were obtained. Expanded particles and a foamed molded product were obtained using such resin particles by the methods similar to those of Example 1, except that the expansion conditions were changed as described in Table 1, and the physical properties thereof were measured and evaluated. The results are shown in Table 1.
The expanded particles of Examples 1 to 9 and Comparative Examples 1 to 3 had three melting peaks in a DSC curve obtained with use of a differential scanning calorimeter, by increasing the temperature of the expanded particles from 40°C to 220°C at a temperature increase rate of 10°C/minute.

(Table 1)

| | | | | Example 1 | Example 2 | Example 3 | Example 4 | Example 5 |
|---|---|---|---|---|---|---|---|---|
| Composition of resin particles | Resin | Mixed resin 1 | parts by weight | 100 | 30 | 30 | 0 | 0 |
| | | Mixed resin 2 | parts by weight | 0 | 0 | 0 | 100 | 30 |
| | | Recycled polypropylene-based resin | parts by weight | 0 | 70 | 0 | 0 | 70 |
| | | Recycled polyethylene-based resin | parts by weight | 0 | 0 | 0 | 0 | 0 |
| | | Non-recycled polypropylene-based resin | parts by weight | 0 | 0 | 70 | 0 | 0 |
| | Additive | Talc | parts by weight | 0.05 | 0.05 | 0.05 | 0.05 | 0.05 |
| | | Glycerin | parts by weight | 0.20 | 0.20 | 0.20 | 0.20 | 0.20 |
| | | Carbon black | parts by weight | 0.00 | 0.00 | 0.00 | 0.00 | 0.00 |
| | | Hindered amine-based flame retarder | parts by weight | 0.00 | 0.00 | 0.00 | 0.00 | 0.00 |
| Physical properties of resin particles | | Dispersion average area of polyethylene phases | $\mu m^2$/particle | 1.38 | 1.50 | 1.48 | 0.02 | 0.05 |
| | | L | mm | 2.15 | 2.15 | 2.15 | 2.15 | 2.15 |
| | | (Dmax+Dmin) / 2 | mm | 0.86 | 0.86 | 0.86 | 0.86 | 0.86 |
| | | L/D | - | 2.5 | 2.5 | 2.5 | 2.5 | 2.5 |
| Expansion conditions | | Expansion temperature | °C | 153.2 | 152.0 | 151.8 | 153.2 | 152.0 |
| | | Expansion pressure | MPa | 2.2 | 2.2 | 2.2 | 2.2 | 2.2 |
| Quality of second-step expanded particles | | DSC ratio | % | 22.0 | 24.0 | 23.1 | 23.3 | 23.0 |
| | | Expansion rate | times | 26.1 | 25.5 | 25.8 | 25.9 | 26.2 |
| | | L/D | - | 1.0 | 1.0 | 1.0 | 1.0 | 1.0 |
| | | Dispersion average area of polyethylene-based resin phases | $\mu m^2$/particle | 1.50 | 1.48 | 1.46 | 0.04 | 0.08 |
| | | Aspect ratio of polyethylene-based resin phases | - | 12.0 | 14.0 | 14.1 | 10.0 | 15.2 |
| Molding quality | | Molded product density | g/L | 24.0 | 23.5 | 23.8 | 23.8 | 24.1 |
| | | Thin portion filling property | - | 1 | 1 | 1 | 1 | 1 |
| | | Surface appearance | - | 1 | 1 | 1 | 1 | 1 |

(Table 1)

| | | | | Example 6 | Example 7 | Example 8 | Example 9 |
|---|---|---|---|---|---|---|---|
| Composition of resin particles | Resin | Mixed resin 1 | parts by weight | 0 | 0 | 0 | 0 |
| | | Mixed resin 2 | parts by weight | 30 | 100 | 30 | 30 |
| | | Recycled polypropylene-based resin | parts by weight | 0 | 0 | 70 | 0 |
| | | Recycled polyethylene-based resin | parts by weight | 0 | 0 | 0 | 0 |
| | | Non-recycled polypropylene-based resin | parts by weight | 70 | 0 | 0 | 70 |
| | Additive | Talc | parts by weight | 0.05 | 0.05 | 0.05 | 0.05 |
| | | Glycerin | parts by weight | 0.20 | 0.20 | 0.20 | 0.20 |
| | | Carbon black | parts by weight | 0.00 | 3.00 | 3.00 | 3.00 |
| | | Hindered amine-based flame retarder | parts by weight | 0.00 | 0.10 | 0.10 | 0.10 |
| Physical properties of resin particles | | Dispersion average area of polyethylene phases | $\mu m^2$ /particle | 0.05 | 0.02 | 0.03 | 0.04 |
| | | L | mm | 2.15 | 2.15 | 2.15 | 2.15 |
| | | (Dmax+Dmin) / 2 | mm | 0.86 | 0.86 | 0.86 | 0.86 |
| | | L/D | - | 2.5 | 2.5 | 2.5 | 2.5 |
| Expansion conditions | | Expansion temperature | °C | 151.8 | 153.2 | 152.0 | 151.8 |
| | | Expansion pressure | MPa | 2.2 | 2.2 | 2.2 | 2.2 |
| Quality of second-step expanded particles | | DSC ratio | % | 24.1 | 20.0 | 23.0 | 23.5 |
| | | Expansion rate | times | 25.4 | 25.5 | 25.8 | 25.9 |
| | | L/D | - | 1.0 | 1.0 | 1.0 | 1.0 |
| | | Dispersion average area of polyethylene-based resin phases | $\mu m^2$ /particle | 0.07 | 0.03 | 0.03 | 0.04 |
| | | Aspect ratio of polyethylene-based resin phases | - | 15.1 | 11.2 | 14.2 | 14.0 |
| Molding quality | | Molded product density | g/L | 23.3 | 23.5 | 23.9 | 23.9 |
| | | Thin portion filling property | - | 1 | 1 | 1 | 1 |
| | | Surface appearance | - | 1 | 1 | 1 | 1 |

(Table 1)

| | | | | Comparative Example 1 | Comparative Example 2 | Comparative Example 3 |
|---|---|---|---|---|---|---|
| Composition of resin particles | Resin | Mixed resin 1 | parts by weight | 0 | 0 | 100 |
| | | Mixed resin 2 | parts by weight | 0 | 0 | 0 |
| | | Recycled polypropylene-based resin | parts by weight | 95 | 70 | 0 |
| | | Recycled polyethylene-based resin | parts by weight | 5 | 30 | 0 |
| | | Non-recycled polypropylene-based resin | parts by weight | 0 | 0 | 0 |
| | Additive | Talc | parts by weight | 0.05 | 0.05 | 0.05 |
| | | Glycerin | parts by weight | 0.20 | 0.20 | 0.20 |
| | | Carbon black | parts by weight | 0.00 | 0.00 | 0.00 |
| | | Hindered amine-based flame retarder | parts by weight | 0.00 | 0.00 | 0.00 |
| Physical properties of resin particles | | Dispersion average area of polyethylene phases | $\mu m^2$ /particle | 1.10 | 0.07 | 1.40 |
| | | L | mm | 2.15 | 2.15 | 1.53 |
| | | (Dmax+Dmin) /2 | mm | 0.86 | 0.86 | 1.02 |
| | | L/D | - | 2.5 | 2.5 | 1.5 |
| Expansion conditions | | Expansion temperature | °C | 153.2 | 152.0 | 153.2 |
| | | Expansion pressure | MPa | 2.2 | 2.2 | 2.2 |
| Quality of second-step expanded particles | | DSC ratio | % | 22.3 | 23.8 | 23.1 |
| | | Expansion rate | times | 25.4 | 25.6 | 26.0 |
| | | L/D | - | 1.0 | 1.0 | 0.8 |
| | | Dispersion average area of polyethylene-based resin phases | $\mu m^2$ / particle | 1.15 | 0.13 | 1.50 |
| | | Aspect ratio of polyethylene-based resin phases | - | 2.7 | 3.0 | 7.2 |
| Molding quality | | Molded product density | g/L | 23.2 | 23.4 | 24.0 |
| | | Thin portion filling property | - | 0 | 0 | 0 |
| | | Surface appearance | - | 0 | 0 | 0 |

Industrial Applicability

With an embodiment of the present invention, it is possible to provide polypropylene-based expanded particles having an excellent filling property with respect to a mold which has a thin portion formation site. A polypropylene-based foamed molded product obtained by foaming the polypropylene-based expanded particles in accordance with an embodiment of the present invention has an excellent thin portion filling property. Thus, the polypropylene-based foamed molded product can have various uses such as shock-absorbing packing materials, shipping materials, heat insulating materials, civil engineering and construction materials, and automotive components, and can suitably be used for, in particular, a foamed molded product which has a complex shape.

**Claims**

1. A method for producing polypropylene-based expanded particles, the method comprising:

   a first melting and kneading step of melting and kneading a polypropylene-based resin (a) and a polyethylene-based resin (b) to obtain a mixed resin;
   a second melting and kneading step of melting and kneading the mixed resin to obtain polypropylene-based resin particles; and
   an expanding step of expanding the polypropylene-based resin particles,
   the polypropylene-based resin particles having an L/D of not less than 2.0.

2. The method according to claim 1, wherein
   in the first melting and kneading step, 60 parts by weight to 99 parts by weight of the polypropylene-based resin (a) and 1 part by weight to 40 parts by weight of the polyethylene-based resin (b) are melted and kneaded such that a total amount of the polypropylene-based resin (a) and the polyethylene-based resin (b) is 100 parts by weight.

3. The method according to claim 1, wherein
   the expanding step includes a pressure-release expanding step of expanding the polypropylene-based resin particles in an aqueous dispersion medium.

4. The method according to claim 1, wherein
   the polypropylene-based resin (a) and/or the polyethylene-based resin (b) include(s) a recycled resin.

5. The method according to claim 1, wherein
   the polypropylene-based resin particles each have a sea-island structure in which a continuous phase and dispersed phases exhibit phase separation, the continuous phase including the polypropylene-based resin (a), the dispersed phases including the polyethylene-based resin (b), and the dispersed phases have a dispersion average area per dispersed phase of 0.01 $\mu$m$^2$ to 3.00 $\mu$m$^2$.

6. The method according to claim 1, wherein
   the polypropylene-based resin (a) has a melting point of 135°C to 160°C.

7. The method according to claim 1, wherein
   the polyethylene-based resin (b) has a melting point of 100°C to 140°C.

8. Polypropylene-based expanded particles having a sea-island structure in which a continuous phase and dispersed phases exhibit phase separation, the continuous phase including a polypropylene-based resin (a), the dispersed phases including a polyethylene-based resin (b), the dispersed phases having an aspect ratio of 7.5 to 20.0.

9. The polypropylene-based expanded particles according to claim 8, wherein
   the polypropylene-based resin (a) and/or the polyethylene-based resin (b) include(s) a recycled resin.

10. The polypropylene-based expanded particles according to claim 8, wherein
    the polypropylene-based expanded particles have at least three melting peaks in a DSC curve, the DSC curve being obtained with use of a differential scanning calorimeter, by increasing a temperature of the polypropylene-based expanded particles from 40°C to 220°C at a temperature increase rate of 10°C/minute.

11. The polypropylene-based expanded particles according to claim 8, wherein
    the dispersed phases have a dispersion average area per dispersed phase of 0.01 $\mu$m$^2$ to 3.00 $\mu$m$^2$.

12. The polypropylene-based expanded particles according to claim 8, wherein
    the polypropylene-based expanded particles have a DSC ratio of 10.0% to 40.0%.

13. The polypropylene-based expanded particles according to claim 8, wherein
the polypropylene-based expanded particles have an L/D of 0.8 to 1.2.

14. A method for producing a polypropylene-based foamed molded product, the method comprising
a step of molding polypropylene-based expanded particles obtained by the method according to any one of claims 1 to 7 or the polypropylene-based expanded particles according to any one of claims 8 to 13.

15. A polypropylene-based foamed molded product obtained by molding polypropylene-based expanded particles obtained by the method according to any one of claims 1 to 7 or the polypropylene-based expanded particles according to any one of claims 8 to 13.

FIG. 1

## FIG. 2

350mm

320mm

20mm

20mm

5mm

80mm

100mm

10mm

175mm

10mm

1(Vertical wall portion)　　3(Thin portion)　　2(Bottom portion)

FIG. 3

Surface of expanded particle

500nm

## INTERNATIONAL SEARCH REPORT

| International application No. |
| --- |
| **PCT/JP2024/011571** |

### A. CLASSIFICATION OF SUBJECT MATTER

*C08J 9/18*(2006.01)i
FI: C08J9/18 CES

According to International Patent Classification (IPC) or to both national classification and IPC

### B. FIELDS SEARCHED

Minimum documentation searched (classification system followed by classification symbols)

C08J9/00-9/42; B29C44/00-44/60;67/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2010-121020 A (KANEKA CORP.) 03 June 2010 (2010-06-03)<br>entire text | 1-15 |
| A | WO 2009/047998 A1 (KANEKA CORP.) 16 April 2009 (2009-04-16)<br>entire text | 1-15 |
| A | WO 2017/030124 A1 (KANEKA CORP.) 23 February 2017 (2017-02-23)<br>entire text | 1-15 |
| A | WO 2013/099550 A1 (JSP CORPORATION) 04 July 2013 (2013-07-04)<br>entire text | 1-15 |
| A | JP 2005-23302 A (JSP CORPORATION) 27 January 2005 (2005-01-27)<br>entire text | 1-15 |
| A | JP 2022-511523 A (SABIC GLOBAL TECHNOLOGIES B.V.) 31 January 2022 (2022-01-31)<br>entire text | 1-15 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/011571**

| Patent document cited in search report | | | Publication date (day/month/year) | Patent family member(s) | | | Publication date (day/month/year) |
|---|---|---|---|---|---|---|---|
| JP | 2010-121020 | A | 03 June 2010 | (Family: none) | | | |
| WO | 2009/047998 | A1 | 16 April 2009 | US | 2010/0240854 | A1 | |
| | | | | EP | 2208751 | A1 | |
| | | | | CN | 101821326 | A | |
| WO | 2017/030124 | A1 | 23 February 2017 | US | 2018/0142074 | A1 | |
| | | | | EP | 3339358 | A1 | |
| | | | | CN | 107849285 | A | |
| WO | 2013/099550 | A1 | 04 July 2013 | US | 2015/0001451 | A1 | |
| | | | | EP | 2799473 | A1 | |
| | | | | CN | 104053713 | A | |
| | | | | KR | 10-2014-0119000 | A | |
| JP | 2005-23302 | A | 27 January 2005 | US | 2004/0254254 | A1 | |
| | | | | EP | 1486531 | A1 | |
| | | | | CN | 1572823 | A | |
| JP | 2022-511523 | A | 31 January 2022 | US | 2022/0033608 | A1 | |
| | | | | WO | 2020/114784 | A1 | |
| | | | | EP | 3898800 | A1 | |
| | | | | CN | 113166462 | A | |

Form PCT/ISA/210 (patent family annex) (July 2022)

**REFERENCES CITED IN THE DESCRIPTION**

**Patent documents cited in the description**

- WO 2017030124 A
- WO 2013099550 A
- WO 2022149538 A